# EUROPEAN PATENT APPLICATION

(11) **EP 4 105 171 A1**
(43) Date of publication of application: **21.12.2022**
(21) Application number: 21179719.6
(22) Date of filing: 16.06.2021
(51) Int. Cl.: C01B 3/32, C25B 1/04, C01B 13/02

(54) **PROCESS FOR THE PRODUCTION OF HYDROGEN**

(71) Applicant: UPM-Kymmene Corporation, 00100 Helsinki (FI)
(72) Inventor: JOKELA, Pekka, 02660 Espoo (FI); GUTIERREZ, Andrea, 02160 Espoo (FI)
(74) Representative: Hoffmann Eitle

(57) **Abstract**

The present invention provides a process for the production of hydrogen, comprising (i) subjecting water to electrolysis to produce oxygen and hydrogen, and (ii) reforming methanol in the presence of oxygen to produce hydrogen, wherein at least a portion of the oxygen used in the reforming of methanol is oxygen produced by the electrolysis of water. The invention also provides a process for the production of hydrocarbons using the hydrogen, a system for the production of hydrogen, and a system for the production of hydrocarbons.

## Description

### TECHNICAL FIELD

The present invention relates to the production of hydrogen from methanol. More particularly, the invention concerns a process for the production of hydrogen which utilises electrolysis oxygen in the reforming of methanol. The process produces renewable hydrogen, and the hydrogen can be used in the manufacture of a renewable hydrocarbon fuel.

### TECHNICAL BACKGROUND

There is great world-wide interest in the reduction of greenhouse gas emissions. Biofuels, which are renewable fuels derived from biological matter, are an environmentally friendly alternative to fossil fuels. In Europe, the Renewable Energy Directive (2018) sets a binding renewable energy target for the EU of at least 32% by 2030, with a clause for a possible upward revision by 2023. In terms of the transport sector, the Renewable Energy Directive requires renewable energy to constitute at least 14% of the energy consumed by road and rail transport by 2030. This directive also requires transport biofuels to achieve greenhouse gas savings of at least 65% in order to be considered sustainable.

Hydrocarbon biofuels can be produced by hydrotreatment of biological compounds such as fatty acids and fatty acid esters. Such processes are renewable in the sense of utilising a biological feedstock. However, the hydrogen required for deoxygenation of biological compounds is conventionally produced from natural gas (methane), such that the hydrogen production typically contributes 80-90% of the total greenhouse gas emissions of the biofuel production. This is incompatible with the general aim of reducing the use of fossil fuels.

It is also known to produce hydrogen by gasification of biological matter. Gasification produces a mixture of hydrogen and carbon monoxide (syngas). Syngas can be converted to hydrocarbons by the Fischer-Tropsch process. However, gasification tends to produce syngas having a hydrogen to carbon monoxide molar ratio lower than that required for optimal performance of the Fischer-Tropsch process. Therefore, it is often necessary to add make-up hydrogen to the syngas. Make-up hydrogen may be obtained from natural gas or by conversion of a portion of the carbon monoxide in the syngas using the water-gas shift reaction. The former process is undesirable from an environmental point of view, whilst the latter process is undesirable since the consumption of carbon monoxide reduces the hydrocarbon yield.

As well as having utility in the conversion of oxygenated biological compounds to hydrocarbons and the production of hydrocarbons by the Fischer-Tropsch process, hydrogen is useful as a renewable fuel per se, such as in fuel cells, as well as in the upgrading of hydrocarbons, such as cracking, sulfur removal and isomerisation reactions. However, there remains the problem of producing hydrogen in a manner which is both efficient and environmentally friendly.

In order to satisfy the increasingly stringent requirements regarding lifecycle greenhouse gas emissions, hydrogen production processes are sought which do not rely on fossil fuels and are technically and commercially feasible. The present invention addresses this need.

### SUMMARY OF THE INVENTION

An aspect of the present invention is a process for the production of hydrogen, comprising
(i) subjecting water to electrolysis to produce oxygen and hydrogen, and
(ii) reforming methanol in the presence of oxygen to produce hydrogen,
wherein at least a portion of the oxygen used in the reforming of methanol is oxygen produced by the electrolysis of water.

This process produces hydrogen by means of both electrolysis of water and reforming of methanol. The process is capable of providing a plentiful and reliable supply of hydrogen which can be used as a fuel directly or used in the production of a hydrocarbon fuel or other products. This can avoid the need to use natural gas for the production of hydrogen.

By utilising methanol obtained from a renewable source, the process can provide two renewable hydrogen streams. Greenhouse gas emissions can be minimised by using renewable electricity (e.g. wind-generated electricity) to power the electrolysis unit.

Oxygen produced in the electrolysis step is used in the reforming step. The electrolysis of water provides a convenient and reliable source of oxygen for the reforming of methanol, thereby reducing or completely avoiding the need for a separate oxygen source and avoiding the need to separate oxygen from air. The supply of oxygen to the reforming reactor from the electrolysis unit can easily be adjusted. Electrolysis may produce all of the oxygen required for the reforming step, particularly if there is a plentiful supply of renewable electricity. If the oxygen requirements of the reforming step increase (e.g. due to the need for an increased reaction temperature), the amount of oxygen produced by electrolysis can be readily increased, or the electrolysis oxygen may be supplemented with oxygen from another source. Thus, the process has a high level of flexibility.

The process involves a high degree of integration, in that electrolysis is used as a source of oxygen for the reforming of methanol, and the hydrogen product of electrolysis can be combined with the hydrogen product of methanol reforming. According to conventional practices, oxygen produced by electrolysis is typically vented into the atmosphere.

Another aspect of the invention is a process for the production of hydrocarbons, comprising
(i) producing hydrogen by the process defined above, and
(ii) using hydrogen produced by the reforming of methanol in the production of hydrocarbons from a biological material.

This process uses hydrogen produced by the above-defined reforming of methanol in the production of hydrocarbons, such as diesel-range hydrocarbons, from a biological material, such as fatty acids or fatty acid esters. The hydrogen product of methanol reforming may be supplemented by hydrogen produced by the electrolysis of water. The supply of hydrogen can easily be adjusted. Further, the hydrogen used in the production of hydrocarbons may contain a high percentage of renewable hydrogen. The use of hydrogen produced from natural gas can be avoided.

A further aspect of the invention is a system for the production of hydrogen, comprising
(a) an electrolysis unit for subjecting water to electrolysis to produce oxygen and hydrogen;
(b) a reforming reactor for reforming methanol to produce hydrogen; and
(c) means for conveying oxygen from the electrolysis unit to the reforming reactor, such that oxygen produced in the electrolysis unit can be used in the reforming of methanol in the reforming reactor.

This system is configured to perform the hydrogen production process defined above. The system comprises an electrolysis unit and a reforming reactor which are integrated in terms of the supply of oxygen from the electrolysis unit to the reforming reactor. Both the electrolysis unit and the reforming reactor produce hydrogen, which allows for further integration.

A further aspect of the invention is a system for the production of hydrocarbons, comprising
(a) an electrolysis unit for subjecting water to electrolysis to produce oxygen and hydrogen;
(b) a reforming reactor for reforming methanol to produce hydrogen;
(c) means for conveying oxygen from the electrolysis unit to the reforming reactor, such that oxygen produced in the electrolysis unit can be used in the reforming of methanol in the reforming reactor;
(d) means for producing hydrocarbons; and
(e) means for conveying hydrogen produced in the reforming reactor to the means for producing hydrocarbons, such that the hydrogen can be used in the production of hydrocarbons.

This system is configured to perform the hydrocarbon production process defined above. Means (a) to (c) are as defined above in connection with the hydrogen production system. Means (d) and (e) relate to the production of hydrocarbons. The system is capable of producing hydrocarbons from a biological material, such as fatty acids or fatty acid esters, using hydrogen produced by methanol reforming which utilises oxygen produced by electrolysis of water. The system allows for supplementing of the hydrogen produced in the reforming reactor with hydrogen produced in the electrolysis unit.

### BRIEF DESCRIPTION OF DRAWINGS

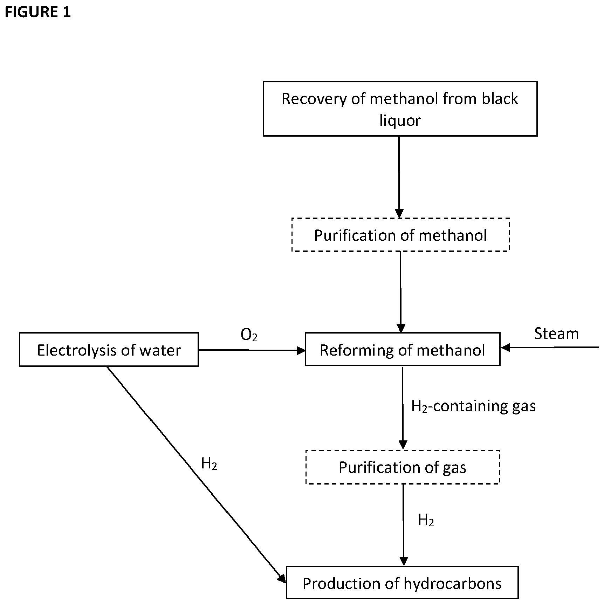

Figure 1: Flow diagram illustrating a process according to the present invention.

### DETAILED DESCRIPTION

The invention will now be described in detail, with reference to the drawings. The discussion of non-essential features, whether using the term "preferable", "embodiment" or a different term, should not be understood to represent a specific teaching or example which cannot be combined with other non-essential features. Such features may be combined together, within the limits of technical compatibility as recognised by the skilled person.

### Electrolysis

The process of the invention comprises the step of subjecting water to electrolysis (i.e. decomposition using electricity) to produce oxygen and hydrogen. This step is performed using an electrolysis unit. The principles of electrolysis would be known to the skilled person. Electrolysis units having different electricity consumptions, oxygen outputs and hydrogen outputs are available.

A suitable electrolysis unit is an alkaline electrolyser, which contains an alkaline electrolyte, such as a solution of sodium or potassium hydroxide, and a porous separator (e.g. a Zirfon^{®} separator) between two electrodes. Hydrogen gas and hydroxide ions are generated at the cathode by reduction of water. The hydroxide ions are transported through the separator to the anode, leading to the production of oxygen gas.

Another suitable electrolysis unit is one that contains a polymer electrolyte membrane (PEM) rather than a liquid electrolyte. In this type of electrolysis unit, water is oxidised at the anode to form oxygen gas, protons and electrons, and the protons selectively pass through the PEM and combine with electrons at the cathode to form hydrogen gas.

The electrolysis unit may be made up of a plurality of interconnected or separate sub-units/modules. This depends upon, for instance, the source and cost of electricity and the oxygen requirements of the reforming step. Different types of electrolyser may be employed in combination to form the electrolysis unit of the invention.

It is preferred that the electrolysis unit is powered by renewable electricity, in order to minimise the environmental impact of the process. "Renewable electricity" means electricity produced from resources which are unlimited or replenished on a human timescale, i.e. non-fossil resources. For example, the electrolysis unit may be powered by one or more of solar-generated electricity, wind-generated electricity, nuclear-generated electricity and biomass-generated electricity. At times when there is a reliable supply of renewable electricity, it may be advantageous to maximise the amount of oxygen produced by electrolysis. Under such circumstances, a high proportion or all of the oxygen used in the reforming of methanol may be oxygen produced by electrolysis. This has the additional benefit of increasing hydrogen production.

The operative power consumption of the electrolysis unit may be up to 100 MW, or possibly greater. The power consumption is suitably 10-50 MW, more suitably 20-50 MW. The oxygen output of the electrolysis step may be up to 5,000 m³/hr (6.6 tonnes/hr), suitably 1,000-4,000 m³/hr, more suitably 2,000-4,000 m³/hr. The hydrogen output of the electrolysis step may be up to 10,000 m³/hr (0.8 tonnes/hr), suitably 2,000-8,000 m³/hr, more suitably 4,000-8,000 m³/hr. The output volumes are determined at 25°C and 1 atm.

It is preferred that at least 50% of the oxygen used in the methanol reforming step is produced in the electrolysis step. More preferably, at least 60%, at least 70% or at least 80% of the oxygen used in the reforming step is produced in the electrolysis step. In an embodiment, at least 90% of the oxygen used in the reforming step is produced in the electrolysis step. It is also possible for 100% of the oxygen used in the reforming step to be produced in the electrolysis step, thereby completely avoiding the need for a second supply of oxygen. The proportion of the oxygen used in the reforming step which is produced in the electrolysis step may vary over time. In this case, the aforementioned percentage values may be average values calculated for the entire period of the reforming step.

The oxygen output of the electrolysis step may be controlled so that most or all of the oxygen is used in the reforming step. This may be achieved by adjusting the number of operational electrolysis sub-units. If more oxygen is produced than is required for the methanol reforming step, it is possible to store the excess oxygen, use the excess oxygen for another application, or vent the excess oxygen. In an embodiment, at least 40%, at least 50%, at least 60%, at least 70%, at least 80% or at least 90% of the oxygen produced in the electrolysis step is used in the reforming step.

Thus, the electrolysis step provides a convenient and reliable source of oxygen for the reforming of methanol, thereby reducing or completely avoiding the need for a separate source of oxygen. A further benefit of the electrolysis step is that it provides a clean supply of oxygen. Little or no purification of the electrolysis oxygen is required for the purposes of the reforming step.

### Methanol Feed

Methanol is conventionally synthesised from syngas produced by gasification of non-renewable resources such as coal. According to the present invention, the methanol which is reformed is preferably methanol produced by renewable means. In a preferred embodiment, the methanol is recovered from black liquor.

The term "black liquor", as used herein, refers to the aqueous liquid by-product of the kraft pulping process which has been separated from solid wood pulp (cellulose fibres). The production of black liquor is well-understood. The kraft pulping process involves the conversion of wood to pulp using an aqueous mixture containing sodium hydroxide and sodium sulfide. These chemicals remove the lignin links between cellulose fibres, thereby releasing the fibres and producing water-soluble compounds.

The kraft process typically produces about 1.5 tonnes of black liquor dry solids per air dry tonne of wood pulp (cellulose fibres). In the past, the organic components of black liquor were utilised merely by burning them for the production of steam used in the generation of electricity.

In addition to wood residues and pulping chemicals, black liquor contains methanol ("kraft methanol") which is principally produced by alkali-catalysed elimination from hemicellulose. The yield of methanol is typically in the range of 8-12 kg per air dry tonne of pulp.

The liquid separated from pulp is commonly referred to as "crude black liquor" or "weak black liquor". In the context of the present invention, the black liquor is not required to be crude in the sense of having undergone no kind of treatment; it is possible for certain compounds to be removed from the black liquor prior to the recovery of methanol. For instance, soap compounds (e.g. fatty acid salts) may be removed from black liquor (e.g. by skimming) prior to the recovery of methanol. The skilled person would recognise the boundaries of the term "black liquor".

The black liquor from which methanol is recovered may have a dry solids content of 10-30 mass% or 10-20 mass%. This includes both dissolved organic solids such as lignin and hemicellulose fragments, and dissolved inorganic solids such as spent pulping chemicals. The methanol content of the black liquor is typically in the range of 0.5-1.5 mass% based on the mass of dry solids. Sulfur compounds are typically contained in the black liquor in an amount of 2-7 mass% based on the mass of dry solids.

Recovery of methanol from black liquor means that methanol contained in black liquor as a product of the pulping process is removed by some means. This may be achieved by evaporation, whereby methanol vapour is drawn off, typically together with water and other compounds such as turpentine and sulfur compounds. Multi-effect evaporation may be employed, in which evaporation takes place in two or more stages (effects) by means of a plurality of heat exchangers connected in series. Vapour generated in the first evaporation stage is used as the heating medium in the second evaporation stage, and so on. Methanol can be recovered as a condensate from one or more of the evaporation stages. Due to its relatively low boiling point, the condensate from the first evaporator may have the highest methanol concentration and therefore be the primary source of methanol.

It is not essential to purify the methanol to a high degree prior to the reforming step. However, methanol may be in admixture with other components, and it may be desirable to increase the methanol purity prior to the reforming step. In particular, methanol may be separated from water by distillation, so as to achieve an increased methanol content of, for instance, at least 70 mass%.

It may be desirable to remove certain components besides water prior to the reforming step. This may be achieved by one or both of distillation and stripping, e.g. stripping followed by distillation. In an embodiment, evaporation is followed by distillation and/or stripping in order to remove impurities such as turpentine and a certain amount of sulfur compounds, although not necessarily all sulfur compounds. Impurities can be stripped from the methanol and removed as overhead gas. Turpentine components (e.g. a-pinene) can cause coke and/or tar formation during the reforming step, so it is desirable to remove turpentine beforehand, particularly if a catalyst is employed in the reforming step. The turpentine content is preferably less than 10 mass%, more preferably less than 7 mass% in the methanol composition subjected to reforming.

The distillation/stripping step may be followed by a further purification step such as an adsorption step, which may involve a single adsorption unit or multiple adsorption units arranged in series. Activated carbon is one example of the adsorption material. The methanol can be passed through one or more columns packed with an adsorption material, whereby impurities are captured. Relatively high molecular weight impurities may be removed in this way.

In an embodiment, methanol is recovered from black liquor by evaporation, and the methanol purity is increased by stripping, followed by adsorption using one or more adsorption units packed with an adsorbent such as activated carbon.

The feed to the reforming reactor preferably contains at least 70 mass% methanol, more preferably at least 80 mass% methanol. The water content of the methanol feed may be up to 30 mass% or up to 20 mass%.

The feed to the reforming reactor may have a sulfur content of 1 ppm (weight-by-weight) or more, 50 ppm or more, 100 ppm or more, or even 200 ppm or more, calculated as elemental sulfur. In an embodiment, the sulfur content is in the range of 1-2,000 ppm. In another embodiment, the sulfur content is in the range of 50-2,000 ppm. In a further embodiment, the sulfur content is in the range of 100-2,000 ppm. In a still further embodiment, the sulfur content is in the range of 200-2,000 ppm. The sulfur content may be determined by UV fluorescence in accordance with EN ISO 20846:2011.

### Methanol Reforming

The process of the invention comprises the step of reforming methanol in the presence of oxygen to produce hydrogen, wherein at least a portion of the oxygen used in the reforming step is oxygen produced in the electrolysis step.

Reforming of methanol in the presence of steam is known and can be represented by the following equation:

CH₃OH + H₂O → CO₂ + 3H₂

This reaction is endothermic and therefore requires a heat source. The process of the present invention employs oxygen in the reforming step, so that the heat required for the reforming reaction may be provided by oxidation reactions (autothermal reforming). In particular, a portion of the methanol can be used as fuel to provide the desired reaction temperature. The presence of oxygen can also help to suppress coke production.

The reforming of methanol is performed in a reforming reactor (reformer). The reforming reactor is not particularly limited. A suitable reforming reactor can be selected on the basis of, for instance, the required hydrogen output, the amount of oxygen available from the electrolysis step, and whether the reforming step is catalytic or non-catalytic. The reforming reactor may have a tubular design.

It is preferred that the electrolysis and reforming steps are performed simultaneously; that is, oxygen is produced by electrolysis at the same time as methanol is reformed using electrolysis oxygen. This simultaneous mode of operation can avoid the need to store oxygen, and means that the electrolysis unit and the reforming reactor can be closely integrated. The oxygen output of the electrolysis unit and the supply of oxygen from the electrolysis unit to the reforming reactor can be controlled to provide an on-demand supply of oxygen based on the oxygen requirements of the reforming step.

The oxygen feed rate to the reforming reactor can be controlled so that there is sufficient oxygen for the reforming of methanol. If the amount of oxygen required for the reforming of methanol increases (e.g. due to an increased feed rate of methanol or the need for an increased reforming temperature), the feed rate of electrolysis oxygen can be increased accordingly. A suitable feed rate of electrolysis oxygen to the reforming reactor is 500-4,000 m³/hr, more suitably 1,000-3,000 m³/hr (at 25°C and 1 atm).

If the reforming step uses oxygen other than oxygen produced by electrolysis, the additional oxygen may be mixed with the electrolysis oxygen upstream of the reforming reactor or fed into the reforming reactor separately. The additional oxygen may be pure oxygen or an oxygen-containing composition such as air. In terms of the effectiveness of the reforming reaction, it is preferred that the additional oxygen is not accompanied by other components; for instance, the oxygen purity is at least 90 vol%, more preferably at least 95 vol%. More generally, it is preferred that the oxygen fed into the reforming reactor from all sources has an overall purity of at least 90 vol%, more preferably at least 95 vol%.

It is preferred that the oxygen to methanol molar ratio in the reforming step is in the range of 0.2:1 - 0.7:1, more preferably 0.4:1 - 0.7:1, for effective reforming of the methanol. This refers to the molar amounts of oxygen and methanol fed into the reforming reactor. A higher oxygen to methanol molar ratio is beneficial when a high reaction temperature is required. A high reaction temperature may be beneficial when the methanol feed contains an appreciable amount of sulfur. The use of electrolysis as a source of oxygen is particularly advantageous in these circumstances. Limitation of the maximum oxygen content is beneficial in terms of avoiding a negative impact on the hydrogen yield.

The reforming of methanol may be catalytic or non-catalytic. In the context of the present invention, "non-catalytic reforming" refers to the production of hydrogen from methanol without the use of a catalyst. In particular, the methanol is reformed without the use of a metal catalyst, such as a transition metal catalyst, whether supported or unsupported.

In the case of catalytic reforming, the catalyst may comprise one or more metals, more particularly one or more transition metals. Whilst noble metal catalysts tend to be poisoned by sulfur compounds, they can be used if the temperature is high enough to prevent the irreversible deposition of sulfur compounds on the catalyst. The catalyst may also comprise a support, which is suitably an oxide.

In an embodiment, the reforming catalyst comprises one or more transition metals selected from Ru, Rh, Ir, Ni, Pd, Pt and Cu, and preferably comprises Ni. The transition metal can be in elemental (reduced) form or in compound form such as an oxide. Preferably, the catalyst comprises elemental Ni. As regards the support, this can be selected from alumina, silica, ZrO₂, TiO₂, ZnO, a zeolite, zeolite-alumina, alumina-silica, alumina-silica-zeolite, and a mixture of any two or more of these. In an embodiment, the catalyst comprises elemental Ni on an alumina support. This catalyst is particularly well-suited to the reforming of methanol at high temperatures.

The reforming step may suitably be performed at a temperature in the range of 700-1,300°C, meaning that the maximum temperature of the gaseous reactant mixture in the reforming reactor is within this range, and the reaction of methanol to produce hydrogen occurs within this temperature range. The temperature may vary within the reforming reactor, i.e. between the reactant inlet and the product outlet. The methanol is typically heated prior to entering the reformer (e.g. to 100-600°C), and the temperature is typically at a maximum close to the product outlet.

The use of a reforming temperature of 700-1,300°C is beneficial in terms of the hydrogen yield and the avoidance of undesirable by-products. As well as avoiding significant coke production, the production of a significant amount of methane is avoided at this reforming temperature. The reforming step is preferably performed at 800-1,100°C, more preferably 850-1,100°C, still more preferably 850-1,000°C, in order to maximise the hydrogen yield. Carbon monoxide and water tend to increase at the expense of hydrogen and carbon dioxide at higher temperatures.

A reforming temperature greater than 800°C can be beneficial when the methanol is contaminated with a significant amount of sulfur compounds, so as to prevent the formation of coke and maximise the production of hydrogen. When the sulfur content is 50 ppm or more, the reforming temperature is preferably at least 850°C. In an embodiment, the sulfur content is in the range of 50-2,000 ppm and the reforming temperature is in the range of 850-1,100°C. In another embodiment, the sulfur content is in the range of 100-2,000 ppm and the reforming temperature is in the range of 850-1,100°C.

The pressure in the reforming reactor is suitably in the range of 1-25 bar, 5-25 bar or 10-25 bar. High pressures can have a negative effect on the hydrogen yield at low temperatures. This can be avoided by performing the reforming step at a temperature greater than 800°C. In the case that the pressure is in the range of 10-25 bar, it is preferable that the reaction temperature is in the range of 850-1,100°C in order to maximise the hydrogen yield and minimise the production of coke.

The yield of hydrogen is benefitted when the steam to methanol molar ratio is at least 1:1. Preferably steam and methanol are fed into the reforming reactor at a molar ratio in the range of 1:1 - 5:1, more preferably 1:1 - 4:1, still more preferably 1:1 - 3:1, and most preferably 1:1 - 2.5:1. At least part of the steam may be provided by the methanol feed; that is, the methanol feed may contain water which is converted to steam. As mentioned above, the methanol feed may have a water content of up to 30 mass% or up to 20 mass%.

The gaseous product of the reforming step comprises hydrogen, carbon dioxide, carbon monoxide, and typically other gases such as hydrogen sulfide. It is preferable to treat the gas mixture in order to separate hydrogen from other compounds, particularly carbon dioxide and hydrogen sulfide. This may be achieved by an amine or methanol/water wash, or may be achieved using an adsorption medium.

The hydrogen yield can be improved by conversion of carbon monoxide produced in the reforming step. In this case, optionally purified product of the reforming step can be fed to a water-gas shift reactor together with steam, so as to produce further hydrogen and carbon dioxide. The shift reaction is favoured at lower temperatures than those used in the reforming step. A preferred temperature range for the shift reaction is 200-450°C. This reaction can be promoted by a catalyst, a particular example of which is an FeCr-based catalyst. This catalyst is effective towards the upper end of the aforementioned temperature range (e.g. 350-450°C), such that less cooling of the gas is required.

Hydrogen produced in a water-gas shift reaction can be purified by suitable means. For instance, the hydrogen can be separated from carbon dioxide in a pressure swing adsorption unit.

Hydrogen is also produced in the electrolysis step. The hydrogen output of the electrolysis step may be greater than, lower than or similar to that of the reforming step. For instance, the electrolysis and reforming steps may each produce hydrogen at a rate of 2,000-8,000 m³/hr or 4,000-8,000 m³/hr.

Hydrogen produced in the electrolysis step may be combined with hydrogen produced in the methanol reforming step. In an embodiment, hydrogen produced in the electrolysis step is combined with hydrogen produced in the methanol reforming step without prior purification of the electrolysis hydrogen. In this case, the hydrogen produced in the methanol reforming step may be purified prior to being combined with the electrolysis hydrogen. Alternatively, the electrolysis hydrogen may be combined with the gaseous hydrogen-containing product of the reforming step without prior purification of either product. The combined hydrogen stream may subsequently be purified, such as described above. Either way, separate purification of the electrolysis hydrogen can be avoided.

An example of a process according to the present invention is illustrated in Figure 1. In terms of the production of hydrogen, this process comprises the steps of recovering methanol from black liquor, optional purification of the methanol, electrolysis of water, reforming the optionally purified methanol using steam and electrolysis oxygen, optional purification of the hydrogen produced by reforming, and combining hydrogen produced by reforming with hydrogen produced by electrolysis without prior purification of the electrolysis hydrogen.

### Production of Hydrocarbons

The hydrocarbon production process of the invention comprises, in addition to the essential steps of the hydrogen production process, the step of using at least a portion of the hydrogen produced by the reforming of methanol in the production of hydrocarbons from a biological material. It is additionally possible to use hydrogen produced by the electrolysis of water in the hydrocarbon production. The hydrocarbons may be fuel-range hydrocarbons, such as diesel-range hydrocarbons.

Examples of the biological material include plant (vegetable) and animal (including fish) fats, oils and waxes; free fatty acids, including those obtained by hydrolysis or pyrolysis of plant and animal fats, oils and waxes; fatty acid esters, including those obtained by transesterification of plant and animal fats, oils and waxes; and metal salts of fatty acids, including those obtained by saponification of plant and animal fats, oils and waxes.

In an embodiment, the biological material comprises or consists of fatty acids and/or fatty acid esters such as triglycerides. In another embodiment, the biological material comprises or consists of one or more of tall oil, tall oil components (e.g. tall oil fatty acids and tall oil resin acids) and tall oil derivatives (e.g. distilled tall oil, tall oil heads and tall oil pitch). Crude tall oil is obtained by acidulation of soaps skimmed from partially concentrated black liquor. In general, tall oil contains saturated and unsaturated oxygen-containing organic compounds such as resin acids (mainly abietic acid and its isomers), fatty acids (mainly linoleic acid, oleic acid and linolenic acid), unsaponifiables, fatty alcohols, sterols and other alkyl hydrocarbon derivatives, as well as minor amounts of inorganic impurities (e.g. alkaline metal compounds, sulfur, silicon, phosphorus, calcium and iron compounds). Tall oil usually does not contain a significant amount of triglycerides since these compounds are decomposed during the pulping process. "Tall oil" covers soap oil as well as crude tall oil.

Accordingly, the process may comprise the steps of obtaining tall oil from black liquor, possibly isolating certain components of the tall oil, such as fatty acids, and treating the tall oil (components) to produce hydrocarbons.

The hydrocarbon production may comprise hydrotreatment in which components of the biological material are chemically altered in the presence of hydrogen and possibly a catalyst. Possible reactions include hydrogenation of double bonds, deoxygenation, desulfurisation, denitrification, isomerisation, ring-opening, aromatisation, dearomatisation and cracking.

In one embodiment, the biological material comprises or consists of fatty acids and/or fatty acid esters, and hydrogen produced by the reforming of methanol, and possibly also hydrogen produced by the electrolysis of water, is used in the conversion of the fatty acids and/or fatty acid esters to hydrocarbons. Such hydrotreatment involves deoxygenation of the fatty acids and/or fatty acid esters. The carboxyl group of fatty acids can be reduced to form a methyl group in the presence of hydrogen.

Alternatively, the hydrogen produced by the reforming of methanol may be used as a hydrogen source in the manufacture of hydrocarbons from syngas by the Fischer-Tropsch process, wherein the syngas may be produced from a biological material. The hydrogen may also find utility in the upgrading of hydrocarbons, such as cracking, isomerisation or sulfur removal.

A preferred process comprises the production of hydrogen by reforming methanol recovered from black liquor, and comprises the production of hydrocarbons from a biological material which is also associated with pulp production, wherein the hydrogen produced from kraft methanol is used in the production of hydrocarbons together with hydrogen produced by the electrolysis of water. The biological material associated with pulp production may be wood which is not utilised in pulp production, or may be one or more other components of black liquor or a derivative thereof, such as tall oil or tall oil fatty acids. Black liquor can serve as a source of both methanol and fatty acids. Fatty acids obtained from black liquor can be converted to hydrocarbons by catalytic deoxygenation in the presence of hydrogen produced from the methanol component of black liquor and hydrogen produced by the electrolysis of water. Such a process involves a high level of integration between pulp production, hydrogen production and hydrocarbon production.

Likewise, there is a high level of integration in a process which comprises the production of hydrogen by reforming methanol recovered from black liquor, the production of syngas by gasification of a material associated with pulp production, such as other components of black liquor or wood, and the production of hydrocarbons by Fischer-Tropsch synthesis using the syngas, wherein the hydrogen produced from kraft methanol is used in the production of hydrocarbons together with hydrogen produced by the electrolysis of water. The hydrogen produced from kraft methanol may be used to optimise the hydrogen to carbon monoxide ratio of the syngas for the Fischer-Tropsch synthesis.

In the process illustrated in Figure 1, hydrogen produced by reforming methanol recovered from black liquor is combined with hydrogen produced by electrolysis of water, and the combined hydrogen stream is used in the production of hydrocarbons, such as hydrotreatment of fatty acids and/or fatty acid esters.

### Systems

The systems of the invention are configured to perform the processes described above.

The system for the production of hydrogen comprises (a) an electrolysis unit for subjecting water to electrolysis to produce oxygen and hydrogen, (b) a reforming reactor for reforming methanol to produce hydrogen, and (c) means for conveying oxygen from the electrolysis unit to the reforming reactor, such that oxygen produced in the electrolysis unit can be used in the reforming of methanol in the reforming reactor. The system for the production of hydrocarbons additionally comprises (d) means for producing hydrocarbons, and (e) means for conveying hydrogen produced in the reforming reactor to the means for producing hydrocarbons, such that the hydrogen can be used in the production of hydrocarbons.

The systems may further comprise one or more of means for combining the hydrogen produced in the electrolysis unit with hydrogen produced in the reforming reactor, a recovery unit for recovering methanol from black liquor, and a pulp mill which produces black liquor. The means for producing hydrocarbons may comprise a reactor for carrying deoxygenation of fatty acids and/or fatty acid esters, or a reactor for carrying out Fischer-Tropsch synthesis of hydrocarbons from syngas.

### EXAMPLES

### Example 1

Electrolysis of water and catalytic autothermal reforming of kraft methanol were integrated as follows.

Black liquor was obtained from a kraft pulping process performed using softwood. The black liquor contained 88.1 mass% of organic components (46.1 mass% lignin and 36.6 mass% aliphatic acids) and 11.9 mass% of inorganic components (4.9 mass% NaOH, 4.7 mass% Na₂S, 2.0 mass% Na₂CO₃, 0.3 mass% others), as a percentage of the dry solids. The total sulfur content of the black liquor was 2.6 mass%.

Methanol was recovered from the black liquor using a capillary evaporator equipped with a 200 W heater, and the methanol was purified by stripping followed by adsorption. The stripping step was performed at 65°C and atmospheric pressure in order to remove some light sulfur compounds. The adsorption step was performed by passing the stripped methanol through activated carbon at 25°C and atmospheric pressure.

The purified composition contained 75 mass% of methanol and 25 mass% of water.

The purified methanol composition was pre-heated to 300°C and subjected to catalytic reforming in a fixed bed reactor using a catalyst obtained by drying and reducing a commercially available NiO-alumina catalyst having a NiO content of 23 mass% and a bulk density of 1.05 g/cm³, without any grinding of the catalyst. The drying of the catalyst was performed in a nitrogen atmosphere, and the reduction (activation) was performed using hydrogen.

The pre-heated methanol composition was introduced into the reactor at a rate of 8.8 tonnes/hr. Steam and oxygen were also introduced separately into the reactor, such that they were mixed with the methanol composition before entering the catalyst bed. Fresh water (as steam) was introduced at a rate of 3.5 tonnes/hr, such that the total feed rate of steam, including the steam produced from the water component of the methanol composition, was 5.7 tonnes/hr. The steam to methanol molar ratio was 1.5:1.

100% of the oxygen fed into the reforming reactor was produced by electrolysis using a 32 MW alkaline electrolyser. The electrolyser had an oxygen output of 2,800 m³/hr (3.7 tonnes/hr) and a hydrogen output of 5,600 m³/hr (0.5 tonnes/hr) at 25°C and 1 atm.

Oxygen produced by electrolysis was fed to the reforming reactor as a rate of 1.6 tonnes/hr, i.e. 43% of the electrolysis oxygen was fed to the reforming reactor. The oxygen to methanol molar ratio was 0.2:1.

The maximum temperature inside the reactor was 900°C, and the pressure was maintained between 2 and 3 bar.

The hydrogen output of the reforming reactor was 0.7 tonnes/hr. Thus, the total hydrogen output of the electrolyser and reforming reactor was 1.2 tonnes/hr. Gas chromatography can be used to analyse the composition of the gaseous product.

### Example 2

Electrolysis of water and non-catalytic reforming of kraft methanol were integrated as follows.

Methanol was recovered, purified and pre-heated in the manner described in Example 1. The composition was subsequently subjected to non-catalytic reforming. The pre-heated methanol composition was introduced into the reforming reactor at a rate of 8.8 tonnes/hr. Steam and oxygen were also introduced separately into the reactor, such that they were mixed with the methanol composition before entering the catalyst bed. Fresh water (as steam) was introduced at a rate of 5.5 tonnes/hr, such that the total feed rate of steam, including the steam produced from the water component of the methanol composition, was 7.7 tonnes/hr. The steam to methanol molar ratio was 2.0:1.

100% of the oxygen fed into the reforming reactor was produced by electrolysis in the manner described in Example 1. Oxygen produced by electrolysis was fed to the reforming reactor as a rate of 1.7 tonnes/hr, i.e. 46% of the electrolysis oxygen. The oxygen to methanol molar ratio was 0.2:1.

The maximum temperature inside the reactor was 900°C, and the pressure was maintained between 2 and 3 bar.

The hydrogen output of the reforming reactor was 0.4 tonnes/hr. Thus, the total hydrogen output of the electrolysis unit and reforming reactor was 0.9 tonnes/hr.

## Claims

1. A process for the production of hydrogen, comprising
(i) subjecting water to electrolysis to produce oxygen and hydrogen, and
(ii) reforming methanol in the presence of oxygen to produce hydrogen,
wherein at least a portion of the oxygen used in the reforming of methanol is oxygen produced by the electrolysis of water.

2. A process according to claim 1, wherein at least 50% of the oxygen used in the reforming of methanol is oxygen produced by the electrolysis of water.

3. A process according to claim 2, wherein at least 90% of the oxygen used in the reforming of methanol is oxygen produced by the electrolysis of water.

4. A process according to claim 1 or claim 2, wherein the electrolysis of water and reforming of methanol are performed simultaneously.

5. A process according to any preceding claim, wherein the electrolysis of water is performed in an electrolysis unit powered by renewable electricity.

6. A process according to any preceding claim, further comprising recovering the methanol from black liquor prior to the reforming of the methanol.

7. A process according to any preceding claim, wherein the reforming of methanol is performed using a catalyst.

8. A process according to claim 7, wherein the catalyst comprises
one or more transition metals selected from Ru, Rh, Ir, Ni, Pd, Pt and Cu; and
an oxide support selected from alumina, silica, ZrO₂, TiO₂, ZnO, zeolite, zeolite-alumina, alumina-silica, alumina-silica-zeolite, and a mixture of any two or more of these.

9. A process according to any of claims 1-6, wherein the reforming of methanol is non-catalytic.

10. A process according to any preceding claim, wherein the oxygen to methanol molar ratio in the reforming step is in the range of 0.2:1 - 0.7:1.

11. A process according to any preceding claim, wherein the reforming of methanol uses steam in an amount such that the steam to methanol molar ratio is in the range of 1:1 - 5:1.

12. A process according to any preceding claim, wherein hydrogen produced by the electrolysis of water and hydrogen produced by the reforming of methanol are combined without prior purification of the hydrogen produced by electrolysis.

13. A process for the production of hydrocarbons, comprising
(i) producing hydrogen by a process as defined in any preceding claim, and
(ii) using hydrogen produced by the reforming of methanol in the production of hydrocarbons from a biological material.

14. A process according to claim 13, further comprising using hydrogen produced by the electrolysis of water in the production of the hydrocarbons.

15. A process according to claim 13 or claim 14, wherein the hydrogen is used in hydrotreatment of fatty acids and/or fatty acid esters contained in the biological material.

16. A process according to any of claims 13-15, wherein the biological material is tall oil or a component thereof.

17. A system for the production of hydrogen, comprising
(a) an electrolysis unit for subjecting water to electrolysis to produce oxygen and hydrogen;
(b) a reforming reactor for reforming methanol to produce hydrogen; and
(c) means for conveying oxygen from the electrolysis unit to the reforming reactor, such that oxygen produced in the electrolysis unit can be used in the reforming of methanol in the reforming reactor.

18. A system according to claim 17, further comprising means for combining the hydrogen produced in the electrolysis unit with hydrogen produced in the reforming reactor.

19. A system according to claim 17 or claim 18, further comprising a recovery unit for recovering methanol from black liquor.

20. A system according to any of claims 17-19, further comprising a pulp mill which produces black liquor.

21. A system for the production of hydrocarbons, comprising
(a) an electrolysis unit for subjecting water to electrolysis to produce oxygen and hydrogen;
(b) a reforming reactor for reforming methanol to produce hydrogen;
(c) means for conveying oxygen from the electrolysis unit to the reforming reactor, such that oxygen produced in the electrolysis unit can be used in the reforming of methanol in the reforming reactor;
(d) means for producing hydrocarbons; and
(e) means for conveying hydrogen produced in the reforming reactor to the means for producing hydrocarbons, such that the hydrogen can be used in the production of hydrocarbons.

22. A system according to claim 21, wherein the means for producing hydrocarbons comprises a reactor for carrying out deoxygenation of fatty acids and/or fatty acid esters, or a reactor for carrying out Fischer-Tropsch synthesis of hydrocarbons from syngas.
